# DEMANDE DE BREVET EUROPEEN

(11) **EP 4 668 759 A1**
(43) Date de publication de la demande: **24.12.2025**
(21) Numéro de dépôt: 25180576.8
(22) Date de dépôt: 03.06.2025
(51) Int. Cl.: H04N 21/433, H04N 21/439, H04N 21/845

(54) **PROCÉDÉ DE GESTION DE L'ACCÈS, PAR UN DISPOSITIF DE LECTURE, À UN CONTENU MULTIMÉDIA APRÈS COUPURE DU SON**

(30) Priorité: 19.06.2024 FR 2406541
(71) Demandeur: Orange, 92130 Issy-les-Moulineaux (FR)
(72) Inventeur: MARCHAND, Hervé, 92326 Chatillon (FR); GASTE, Olivier, 92326 Chatillon (FR)

(57) **Abrégé**

L'invention a trait à un procédé de gestion de l'accès, par un dispositif de lecture (STB), à un contenu multimédia comprenant des segments audios (Sa1) et vidéos (Sv1) téléchargés successivement en vue d'une restitution, caractérisé en ce qu'une réception d'une donnée représentative d'une coupure du son (SND OFF) par le dispositif de lecture (STB) du contenu entraîne un arrêt du téléchargement des segments audios (Sai,Sai+1,...).

## Description

### Domaine technique

L'invention se rapporte au domaine des télécommunications.

L'invention se rapporte à un procédé de gestion de l'accès, par un dispositif de lecture, à un contenu multimédia, après coupure du son.

Un dispositif de lecture vise des dispositifs capables de recevoir un flux multimédia et de requérir une restitution du contenu sur un dispositif de restitution.

### Etat de la technique

Lors d'un accès à un contenu multimédia, le dispositif de lecture émet une requête à destination d'un serveur de contenus en indiquant le contenu multimédia (vidéo et/ou audio) choisi. Le dispositif de lecture reçoit en retour un flux de données numériques relatif à ce contenu. Les données reçues sont ensuite décodées par le dispositif de lecture, puis restituées.

Dans le cas d'un contenu audio-vidéo, la restitution est effectuée sous la forme d'un affichage de la vidéo correspondante avec sa bande-son associée.

La diffusion de contenus multimédia sur Internet est souvent basée sur des protocoles client-serveur de la famille HTTP (de l'anglais « Hyper Text Transport Protocol »). En particulier, le téléchargement en mode progressif des contenus, aussi appelé streaming, permet de transporter et lire les données en temps réel, c'est-à-dire que les données numériques sont transmises sur le réseau et reçues par le dispositif de lecture au fur et à mesure de leur arrivée. Suite à la réception du flux, le dispositif de lecture stocke des données reçues dans une mémoire tampon (buffer en anglais) avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et de recevoir des données suivant différentes qualités correspondant par exemple à différents débits d'encodage respectifs. Ces différentes qualités sont décrites dans un fichier de description, également appelé « Manifest » par l'homme du métier.

Quand un utilisateur accède au flux Live diffusé en http Adaptative Streaming (HAS), le dispositif de lecture, via une entité de gestion du téléchargement HAS, récupère à intervalle régulier, en général toutes les deux secondes, des fichiers de description successivement qui décrivent chacun généralement les soixante dernières secondes du flux (30 segments de 2 secondes) en fournissant des adresses de segments correspondant à ces soixante dernières secondes. Dans ce fichier de description inclut des URL des segments téléchargeables.

Lors de la lecture d'un contenu multimédia en adaptive streaming, le dispositif de lecture, sous-entendu l'entité de téléchargement HAS, récupère de manière régulière les segments audios et les segments vidéos en utilisant les adresses sur le réseau réseaux (par exemple des URL sigle Anglo-Saxon de « Uniform Resource Locator ») des segments décrits dans le dernier fichier de description reçu, respectivement.

Les segments audios et vidéos sont téléchargés à peu près au même rythme et le dispositif de lecture se charge de stocker en mémoire (l'homme du métier parle de « bufferiser ») les segments audios et les segments vidéos reçus par le dispositif de lecture sur une même profondeur de mémoire tampon (Buffer en anglais). On utilisera indiffférement mémoire tampon ou buffer dans le présent texte.

Aussi, lors de la lecture d'un contenu audio et/ou vidéo, il est possible pour l'utilisateur de mettre la sortie audio en mute de façon à couper totalement le son.

Les inventeurs ont constaté après coupure du son que le dispositif de lecture, continue de télécharger inutilement des segments audios. Ces téléchargements inutiles occupent de la bande passante dans le réseau de l'opérateur de télécommunications sur lequel sont téléchargés les segments, ce qui n'est pas souhaitable.

L'invention vient améliorer la situation.

A cet effet, l'invention se rapporte à un procédé de gestion de l'accès à des segments audios d'un contenu multimédia téléchargés successivement, les segments étant voués à être reçus par un dispositif de lecture en vue d'une restitution sonore, caractérisé en ce qu'une réception d'une donnée représentative d'une coupure du son par le dispositif de lecture lors de la lecture du contenu entraîne un arrêt de la réception de segments audios.

Selon l'invention, lorsque le son est coupé, le dispositif de lecture cesse de recevoir les segments audios ; ces derniers ne sont plus téléchargés inutilement améliorant de ce fait la bande passante sur le réseau sur lequel sont téléchargés les segments. On verra dans la suite que, lorsque le contenu est un contenu audio-vidéo, le dispositif de lecture poursuit la lecture du contenu uniquement à la base des segments vidéos téléchargés.

Selon un premier mode de mise en œuvre particulier de l'invention, une coupure du son entraîne un arrêt de la transmission des requêtes d'accès aux segments audios. Ce premier mode est une façon simple de mettre fin la transmission des segments audio en arrêtant les messages demandeurs de segments. A noter que dans ce premier mode, l'arrêt peut concerner tout ou partie des requêtes d'accès audio.

Selon un deuxième mode de mise en œuvre particulier de l'invention, qui pourra être mis en œuvre alternativement ou cumulativement avec le précédent, suite à la coupure du son, la lecture du contenu se poursuit en lisant un segment audio de substitution. Ce mode est intéressant lorsque le contenu est un contenu audio-vidéo et lorsque le dispositif de lecture ne peut lire le contenu que si les segments à la fois audios et vidéos sont enregistrés dans la mémoire tampon (buffer) du dispositif de lecture. Dans ce deuxième mode, le dispositif de lecture ne téléchargeant plus de segments audios, le segment de substitution permet au dispositif de lecture de remplir le buffer audio et de poursuivre la lecture de segments à la base d'un segment vidéo téléchargé et du segment de substitution ; ce dernier peut être le même segment audio utilisé à chaque lecture de segments vidéos ; le segment de substitution choisi peut aussi être différent à chaque lecture d'un segment. Ce deuxième mode évite un arrêt brutal de la lecture du fait de l'arrêt du téléchargement des segments audios et donc d'un buffer audio vide.

Selon une première variante du deuxième mode, le segment de substitution est un segment téléchargé et mémorisé dans le dispositif de lecture avant la coupure du son. Dans la plupart des dispositifs de lecture, plusieurs segments sont mémorisés dans une mémoire tampon audio avant d'être lu puis effacé après lecture ; en effet, dans certains dispositifs de lecture, une fois la lecture débutée, le dispositif de lecture cherche à remplir un buffer avec un niveau de données atteignant environ vingt secondes soit à peu près dix segments de deux secondes. Le segment de substitution peut être choisi parmi les dix derniers segments mémorisés.

Selon une deuxième variante du deuxième mode, avant coupure du son, un segment peut être effacé après lecture ; dans cette configuration, suite à la coupure, le procédé comprend un empêchement d'un effacement d'un segment audio téléchargé et une utilisation de ce segment comme segment de substitution. En reprenant l'exemple ci-dessus de dix segments de dix secondes, le segment de substitution peut être choisi parmi les dix derniers segments mémorisés.

Selon une sous-variante de cette deuxième variante, un empêchement d'un effacement comprend une interception d'une commande d'effacement. Une fois interceptée, la commande n'est pas exécutée et le segment visé par l'effacement n'est pas effacé et peut être utilisé comme segment audio de substitution los de la poursuite de la lecture du contenu.

Selon un troisième mode de réalisation de l'invention, qui pourra être mis en œuvre alternativement ou cumulativement avec les précédents, le contenu inclut en outre des segments vidéos ; dans ce cas comme indiqué ci-dessus, suite à l'arrêt du téléchargement des segments audios, la lecture du contenu est poursuivie en téléchargeant et en lisant les segments vidéos.

Selon un aspect matériel, l'invention se rapporte à une entité de gestion de l'accès, par un dispositif de lecture, à un contenu multimédia comprenant des segments audios et vidéos téléchargés successivement en vue d'une restitution, caractérisé en ce qu'elle comprend un module de réception apte à recevoir une donnée représentative d'une coupure du son par le dispositif de lecture du contenu et un module d'arrêt apte à entraîner, suite à la réception de la donnée représentative d'une coupure du son, un arrêt du téléchargement des segments audios.

Selon un autre aspect matériel, l'invention a trait à un dispositif de lecture caractérisé en ce qu'il comprend une entité de gestion telle que définie ci-dessus.

Selon un autre aspect matériel, l'invention a trait à un programme d'ordinateur apte à être mis en œuvre dans une entité de gestion tel que définie ci-dessus, ledit programme comprenant des instructions de code qui, lorsque le programme est exécuté réalise l'étape définie dans le procédé défini ci-dessus.

Selon un autre aspect matériel, l'invention a trait à un support d'enregistrement lisible par un processeur de données sur lequel est enregistré un programme comprenant des instructions de code de programme pour l'exécution des étapes du procédé défini ci-dessus.

Précisions ici que le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig. 1] représente un système informatique dans lequel l'invention peut être mise en œuvre..
[Fig. 2] est une vue schématique des circuits présents dans le dispositif de lecture.
[Fig. 3] est un algorithme illustrant une suite d'étapes mises en œuvre selon un mode de réalisation possible de l'invention dans lequel le contenu accédé est un contenu audio et vidéo.

### Description détaillée d'un exemple de réalisation illustrant l'invention :

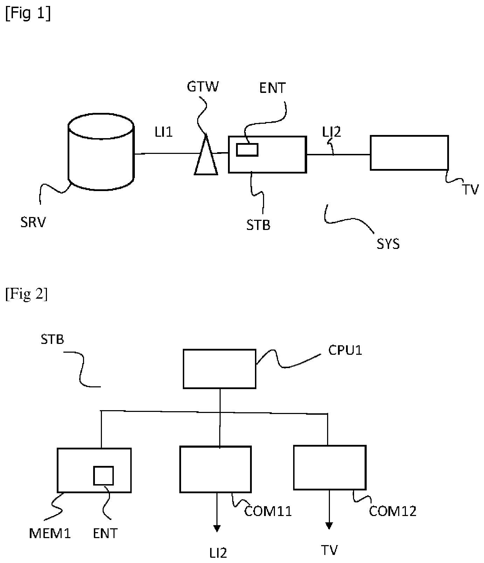

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias. Le serveur de diffusion de contenus, appelé dans le présent texte serveur de contenus, diffuse sur plusieurs canaux de diffusion associés à des chaînes de télévision.

Dans notre exemple, à des fins de simplification de l'exposé, le système SYS comprend un seul dispositif de lecture STB. Cependant, l'invention s'applique à un nombre quelconque de dispositifs de lecture, le principe de l'invention pouvant être mis en œuvre sur tout ou partie des dispositifs de lecture STB.

Le dispositif de lecture STB est un dispositif de lecture contenus numériques tel qu'un décodeur.

Le contenu multimédia visé ici est un contenu audio et/ou vidéo. Un contenu audio est par exemple une émission de radio et un contenu vidéo est par exemple une chaîne de télévision. Le contenu est diffusé depuis un ou plusieurs serveurs décrits ci-dessous. On verra dans la suite que l'invention s'applique autant à un contenu audio qu'à un contenu audio-vidéo.

Dans notre exemple, le dispositif de lecture STB est connecté à un terminal de restitution TV tel qu'une télévision. Le dispositif peut transmettre des données à restituer au dispositif de restitution TV. Une commande de coupure de son permet de couper le son sur ce dispositif de restitution TV. La commande peut être issue d'une télécommande directement reçue par le dispositif de restitution TV ou via le dispositif de lecture STB.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW.

La passerelle GTW est apte à communiquer via une liaison de communication LI1 qui peut être un réseau de télécommunication tel qu'un réseau étendu WAN connu de l'homme du métier.

Dans notre exemple, le système informatique SYS met en œuvre un réseau de diffusion de contenus appelé CDN (Content Distribution Network) par l'homme du métier depuis lequel des contenus sont transmis à destination de dispositifs de lecture de contenus STB.

Le réseau CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB, via des canaux de diffusion.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison LI2 de type HDMI.

Le dispositif de lecture STB communique avec la passerelle via un module Ethernet pour une communication locale avec fils ou via un module radio de type Wi-Fi pour une communication locale sans fils avec la passerelle résidentielle GTW. Le module en question est référencé COM11 sur la figure 2.

Dans notre exemple, le dispositif de lecture STB comprend une entité de gestion du téléchargement en mode streaming HAS (http Adaptative Streaming), non représenté, apte à gérer le téléchargement de segments du contenu lorsque le contenu est transmis sur le réseau LI1 sous forme de segments conformément à la technique dite de streaming adaptatif connu de l'homme du métier.

Rappelons brièvement ici que lorsqu'un utilisateur accède à un flux Live diffusé en http Adaptative Streaming (HAS), le dispositif de lecture STB reçoit à intervalle régulier, par exemple toutes les deux secondes des fichiers de description successivement qui décrivent chacun généralement les soixante dernières secondes du flux (30 segments de 2 secondes) en fournissant des adresses de type URLs de segments correspondant à ces soixante dernières secondes. Grâce aux adresses de segments reçues, le dispositif de lecture STB peut télécharger les segments dans une mémoire MEM1 (un buffer audio pour la partie audio et/ou un buffer vidéo pour la partie vidéo), les décoder et les lire les uns après les autres en vue d'une restitution sur le dispositif de restitution TV.

Le serveur SRV est également équipé d'au moins un processeur et de mémoires pour la réalisation de traitement informatique. Le serveur SRV communique avec la passerelle GTW via réseau WAN.

Les étapes selon un mode de réalisation sont décrites ci-dessous.

Lorsque le dispositif de lecture STB accède au contenu pour le lire les étapes sont les suivantes :
L'entité HAS accède aux segments successivement en transmettant pour chaque segment une requête en téléchargement. Les requêtes pour un accès audio et vidéo sont transmises en général sensiblement en même temps et sont reçues aussi par le dispositif de lecture STB à peu près en même temps ;
Après réception, le dispositif de lecture STB mémorise un certain nombre de segments audios et/ou vidéos dans une mémoire RAM (un buffer audio et un buffer vidéo) et décode les segments pour pouvoir être restitués sur le dispositif de restitution TV.

Une fois transmis vers le dispositif de restitution TV, les segments sont effacés de la mémoire RAM.

Suite à une coupure du son sur le dispositif de restitution TV, selon l'invention, le dispositif de lecture STB ne reçoit plus les segments audios.

On verra dans la suite, que dans le cas d'un contenu audio-vidéo, la lecture se poursuit uniquement à la base des segments vidéo téléchargés.

Dans notre exemple, l'arrêt de la réception des segments audios par le dispositif de lecture STB s'effectue en ne transmettant plus de requêtes d'accès aux segments audios. Selon une variante, l'arrêt de la réception des segments audios par le dispositif de lecture STB pourrait aussi être réalisé en transmettant au serveur SRV une demande d'arrêt de la transmission des segments audios.

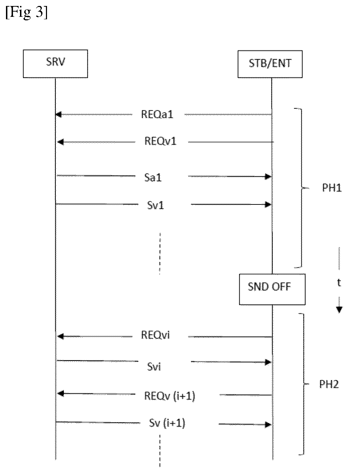

La figure 3 illustre un mode de réalisation du procédé de l'invention basé sur un contenu audio-vidéo.

Sur cette figure 3 :
Les requêtes d'accès aux segments audio seront référencées REQai ;
Les requêtes d'accès aux segments vidéo seront référencées REQvi ;
Ces requêtes incluent les URL d'accès à un segment audio Sai et vidéo Svi respectivement.
Les segments audios seront référencés Sai ;
Les segments vidéos seront référencés Svi ;
L'indice « i » désigne le n-ième segment.

Sont représentés sur cette figure 3 deux axes associés au serveur SRV et au dispositif de lecture STB incluant l'entité de gestion ENT. Des flèches représentent des échanges de données entre les deux entités. A noter que les écarts temporels entre les instants d'émissions de requêtes ou les instants d'émission de segments ne sont pas représentatifs de la réalité ; l'exemple illustré est simplifié de manière à mettre en avant le principe de l'invention, à savoir un arrêt de la réception de segments audios suite à une coupure du son.

Cette figure 3 illustre deux phases principales : une première phase PH1 de lecture du contenu avant coupure du son, et une deuxième phase PH2 de lecture du contenu après coupure du son.

Lors de la première phase PH1 précédant une coupure de son, le dispositif de lecture STB transmet des requêtes successives d'accès aux segments audios et vidéos : une première requête REQa1 et RQv1 et reçoit en retour un segment audio a1 et un segment vidéo v1 ; ainsi de suite, le dispositif de lecture STB transmet des requêtes et reçoit en retour les segments demandés (non représentés sur la figure car sans intérêt pour l'exposé de l'invention). Seules les requêtes d'accès au premier segments sont représentés sur la figure pour simplifier l'exposé.

On suppose maintenant qu'un utilisateur du dispositif de restitution TV coupe le son. Cette étape est référencé SND OFF sur la figure 3.

La deuxième phase PH2 comprend les étapes suivantes :
Le dispositif de lecture STB , sous-entendu l'entité de gestion ENT, reçoit en premier lieu une donnée représentative d'une coupure de son et exécute les étapes suivantes.

A réception de la donnée relative à la coupure du son, l'entité ENT requiert un arrêt de la transmission des requêtes d'accès aux segments audios. Dans notre exemple, le dispositif de lecture STB poursuit alors la lecture en transmettant des requêtes d'accès successives aux segments vidéos uniquement ; sur la figure 3, une requête d'accès à un segment vidéo REQvi est transmise et un segment vidéo Svi est reçu en retour et ainsi de suite une requête REQv(i+1) et un segment Vi+1, etc.

Une autre façon de ne pas recevoir de segments audios pourrait aussi consister à intercepter des requêtes d'accès aux segments audio et empêcher leurs transmissions respectives vers le serveur stockant les segments audios.

On suppose maintenant, selon un mode de réalisation particulier de l'invention, que l'entité de gestion HAS lit le contenu que s'il y a à la fois un segment audio et un segment vidéo dans les buffers respectifs et que dans le cas contraire, la lecture est bloquée et le contenu ne peut être restitué.

Afin de poursuivre une lecture sans interruption, un ou plusieurs segments audios de substitution sont enregistrés dans le buffer audio ; Par exemple si l'entité HAS doit enregistrer dix segments audios dans le buffer pour garantir une lecture, les dix segments sont remplacés par exemple le même segment de substitution ; les segments enregistrés dans le buffer peuvent aussi être réutilisés.

Les segments audios de substitution et les segments vidéos téléchargés étant enregistrés dans les buffers audio et vidéo, l'entité HAS peut lire les segments et requérir une restitution des segments sur le dispositif de restitution TV.

En d'autres mors, les segments audios qui auraient dû être téléchargés sont remplacés par d'autres segments audios de substitution. Un segment de substitution peut être choisi de plusieurs manières dont les suivantes :
Selon une première manière, le segment de substitution est le dernier segment reçu par le dispositif de lecture STB. Au lieu d'être effacé après sa lecture du buffer audio, l'entité de gestion ENT empêche un effacement du segment dans le buffer audio. Ce mode permet de maintenir dans le buffer audio un segment audio de substitution réutilisable plusieurs fois lors de la lecture de segments vidéos successifs.

Selon une deuxième variante, suite à la coupure du son, les segments audios téléchargés dans le buffer audio ne sont pas effacés après lecture. Ces segments audios peuvent être réutilisés lors de la lecture du contenu à la place des segments qui auraient dû être téléchargés et décrit dans le dernier fichier de description reçu après coupure du son. En d'autres mots, après coupure du son, les segments audios décrits dans les fichiers de description ne sont pas utilisés et sont remplacés par des segments de substitution. Le lecteur ne prend donc pas en compte les URLs des segments audios.

L'empêchement visé ci-dessus peut consister à intercepter une commande d'effacement afin que cette dernière ne soit pas exécutée par le processeur du dispositif de lecture STB. Cet empêchement permet de maintenir dans le buffer audio les segments téléchargés afin de les réutilisés à souhait au cours de le lecture du contenu.

Précisons ici que, dans notre exemple, le segment audio est reçu et enregistré dans un buffer audio ; le lecteur de segment installé dans le dispositif de lecture STB est dans notre exemple un lecteur « Adaptive Streaming » exécuté dans un navigateur Web. Ce lecteur gère non seulement le stockage dans le buffer audio mais aussi- le stockage d'un nombre de segments suffisants pour assurer une lecture du contenu sans coupure ; généralement la profondeur de buffer est de quinze à vingt secondes.

De préférence, un segment de substitution est un segment déjà décodé et prêt à être transmis pour être restitué. Ce mode évite un décodage du segment de substitution à chaque fois qu'une lecture de ce segment est demandée ; cela permet de réduire la ressource processeur du dispositif de lecture STB à chaque lecture de segment.

A noter que lorsque le son est de nouveau activé, le procédé de téléchargement reprend comme à la normal en téléchargeant les segments à la fois audios et vidéos jusqu'en éventuelle prochaine coupure.

Précisons ici aussi que le terme segment visé dans le mode de réalisation des segments de type HAS ; cependant, l'invention s'étend à tout type de segments similaires.

Signalons enfin ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'accès, par un dispositif de lecture (STB), à un contenu multimédia comprenant des segments audios et vidéos téléchargés successivement en vue d'une restitution, **caractérisé en ce qu'**une réception d'une donnée représentative d'une coupure du son (SND OFF) par le dispositif de lecture (STB) entraîne un arrêt du téléchargement des segments audios.

2. Procédé de gestion selon la revendication 1, **caractérisé en ce qu'**une coupure entraîne un arrêt de la transmission des requêtes d'accès aux segments audios.

3. Procédé de gestion selon la revendication 1, **caractérisé en ce que**, suite à la coupure du son, la lecture du contenu se poursuit en lisant un segment audio de substitution.

4. Procédé de gestion selon la revendication 3, **caractérisé en ce que** le segment de substitution est un segment téléchargé et mémorisé dans le dispositif de lecture avant la coupure du son.

5. Procédé de gestion selon la revendication 3, **caractérisé en ce que** suite à la coupure du son, le procédé comprend un empêchement d'un effacement d'un segment audio téléchargé après lecture et une utilisation de ce segment comme segment de substitution.

6. Procédé de gestion selon la revendication 5, **caractérisé en ce qu'**un empêchement d'un effacement comprend une interception d'une commande d'effacement.

7. Procédé de gestion selon la revendication 4, **caractérisé en ce que** le segment de substitution est un segment ayant été décodé.

8. Procédé de gestion selon la revendication 1, **caractérisé en ce que** le contenu inclut en outre des segments vidéos, et **en ce que** suite à l'arrêt, la lecture du contenu est poursuivie en téléchargeant et en lisant les segments vidéos.

9. Entité de gestion (ENT) de gestion de l'accès, par un dispositif de lecture (STB), à un contenu multimédia comprenant des segments audios et vidéos téléchargés successivement en vue d'une restitution, **caractérisé en ce qu'**elle comprend un module de réception apte à recevoir une donnée représentative d'une coupure du son par le dispositif de lecture du contenu et un module d'arrêt apte à entraîner, suite à la réception de la donnée représentative d'une coupure du son, un arrêt du téléchargement des segments audios.

10. Dispositif de lecture (STB) **caractérisé en ce qu'**il comprend une entité de gestion (ENT) telle que définie dans la revendication 7.

11. Programme d'ordinateur apte à être mis en œuvre dans une entité de gestion tel que définie dans la revendication 7, ledit programme comprenant des instructions de code qui, lorsque le programme est exécuté réalise l'étape définie dans la revendication 1.

12. Support d'enregistrement lisible par un processeur de données sur lequel est enregistré un programme comprenant des instructions de code de programme pour l'exécution des étapes du procédé défini dans l'une des revendications 1 à 6.
